# EUROPEAN PATENT APPLICATION

(11) **EP 4 592 364 A1**
(43) Date of publication of application: **30.07.2025**
(21) Application number: 25153967.2
(22) Date of filing: 24.01.2025
(51) Int. Cl.: C09C 1/00, C09D 7/63, G02B 5/22

(54) **OPTICAL DEVICE FOR CONTROLLING COLOR ATTRIBUTES**

(30) Priority: 26.01.2024 US 202463625496 P; 16.01.2025 US 202519025109
(71) Applicant: Viavi Solutions Inc., Chandler, AZ 85286 (US)
(72) Inventor: ARGOITIA, Alberto, 29754 Competa (ES); ZIEBA, Jaroslaw, Santa Rosa, 95405 (US); LIANG, Kangning, Lancaster, 17601 (US); SEYDEL, Johannes P., Petaluma, 94952 (US)
(74) Representative: Murgitroyd & Company

(57) **Abstract**

An optical device including: a host material comprising an optically transparent material; at least one organic colorant in the host material; and at least one additive. The optical device is a particle having a lamellar shape. Compositions including the optical device and methods of making the optical device are also disclosed.

## Description

### RELATED APPLICATION

The present application claims priority to U.S. Provisional Application No. 63/625,496, filed on January 26, 2024, the disclosure of which is hereby incorporated by reference in its entirety.

### FIELD OF THE DISCLOSURE

The present disclosure generally relates to an optical device, methods of making the optical device and compositions including the optical device.

### BACKGROUND

Currently, most colorants used for decorative applications come in the form of pigments that are predominantly formed by grinding or milling various colored inorganic or organic materials into desired particle sizes. This approach faces several limitations. For example, there are limited choices of materials capable of yielding pigments that combine desired colors and specific functional attributes such as lightfastness, chroma, hiding power, environmental stability and toxicity profile. Notably, a majority of pigments that are approved for use in various environmentally demanding applications, such as automotive, marine and aviation markets cannot be used at very small particle sizes for organic pigments as this would diminish their lightfastness. As in understood in the pigment industry, at particle sizes below about 100 nm the lightfastness of organic pigments decreases. This is also a reason why dyes are not used in masstone applications as they not only fail to meet the lightfastness targets but also exhibit a number of other problems such as chemical stability and migration (bleeding) out of the carrier system. This limitation to particles size of pigments has a detrimental effect upon optical effects attainable with colorants, such as flop, light scatter and hiding power of the pigments.

Additionally, several of the historically established pigment systems came recently under scrutiny due to their toxicity profile and are being phased out. This further limits the choices of colorants available to paint companies and OEM for creating new attractive color concepts.

What is needed is an optical device that is engineered to address one or more, such as all, of the aforementioned limitations.

### BRIEF DESCRIPTION OF THE DRAWINGS

Features of the present disclosure are illustrated by way of example and not limited in the following figure(s), in which like numerals indicate like elements, in which:
FIG. 1 illustrates a composition comprising pigments.
FIG. 2 illustrates a schematic cross-sectional view of a lamellar optical device in a composition, according to an aspect of the present disclosure.
FIG. 3 illustrates a schematic cross-sectional view of a lamellar optical device according to an aspect of the present disclosure.
FIG. 4 illustrates a schematic cross-sectional view of a lamellar optical device on a substrate including a release layer, according to an aspect of the present disclosure.
FIG. 5 illustrates a greyscale image of a colored composition including lamellar optical devices, according to an example of the present disclosure.
FIG. 6 illustrates a greyscale image of a colored composition including lamellar optical devices, according to an example of the present disclosure.

### SUMMARY

In an aspect, there is disclosed an optical device, comprising: a host material comprising an optically transparent material; at least one organic colorant in the host material; and at least one additive. The optical device is a particle having a lamellar shape.

The host material may have a first major surface and a second major surface opposing the first major surface. The first major surface and the second major surface may be outermost surfaces of the optical device.

The host material may include one or more polymers.

The at least one organic colorant may include an organic nano-pigment or dye.

The at least one organic colorant may include a nano-pigment chosen from Benzimidazolone-derived pigments, Diketopyrrolopyrrole (DPP) pigments, Disazocondensation pigments, Isoindoline, Perylene pigments and Phthalocyanine pigments.

The at least one organic colorant may include a dye chosen from polymethine dyes, phthalocyanines, porphyrins, azo-dyes and anthraquinone dyes.

The at least one additive may be chosen from UV stabilizers, antioxidants, structural fillers, functional fillers, pigment extenders, surface modifiers and coupling agents.

The at least one organic colorant may have a D50 particle size less than 100 nm.

The optical device may have an aspect ratio of about 2:1 to 10,000:1.

The host material may have a first major surface and a second major surface opposing the first major surface, wherein the layer having a first major surface and a second major is a first layer. The optical device may further comprise at least one additional layer comprising a host material. The at least one additional layer and the first layer forming a stack. The optical device may not include a metal layer. The optical device may not include an embossed layer.

The host material may be an organic polymer. The at least one organic colorant may be a nano-pigment or dye, the nano-pigment or dye may include a material chosen from perylene, perinone, quinacridone, quinacridonequinone, anthrapyrimidine, anthraquinone, anthanthrone, benzimidazolone, disazo condensation pigments, disazo dyes, azo dyes, azo pigments, quinolones, xanthene, azomethine, quinophthalone, indanthrone, phthalocyanine, triarylcarbonium, dioxazine, aminoanthraquinone, isoindoline , diketopyrrolopyrrole (DPP), thioindigo, thiazineindigo, isoindoline, isoindolinone, pyranthrone, isoviolanthrone, miyoshi methane, triarylmethane and mixtures of any two or more thereof.

The first major surface and the second major surface may be textured for light scattering or diffraction. The first major surface and the second major surface may be configured to be optically specular.

In an aspect, there is disclosed a paint system including the optical device described above.

In another aspect, there is disclosed a color composition, comprising: a liquid medium; and a plurality of the optical devices described above dispersed in the liquid medium.

The plurality of optical devices may include a population of optical devices having the same colorant. 75% or more of the optical devices of the population may have a uniform thickness from optical device to optical device.

The composition may be an ink, a varnish or a paint.

In an aspect, there is disclosed a method of making an optical device. The method comprises: combining at least one organic colorant, at least one additive and a liquid host material to form a coating composition, wherein the at least one organic colorant has a D50 particle size of less than 100 nm; depositing the coating composition onto a substrate using a liquid coating process; solidifying the host material to form a solid layer; releasing the substrate from the solid layer; and separating the solid layer into particles.

In another aspect, there is disclosed an optical device, comprising: a host material in the form of a layer having a first major surface and a second major surface opposing the first major surface, the host material comprising an optically transparent material; at least one organic colorant in the host material; and at least one additive. The at least one organic colorant has a D50 particle size less than 100 nm.

The optical device may have an aspect ratio of about 2:1 to 10,000:1.

The layer having a first major surface and a second major may be a first layer. The optical device may further comprise at least one additional layer comprising a host material. The at least one additional layer and the first layer may form a stack.

The optical device may not include a metal layer.

The optical device may not include an embossed layer.

The host material may be an organic polymer. The at least one organic colorant may be is a nano-pigment or dye. The nano-pigment or dye may include a material chosen from perylene, perinone, quinacridone, quinacridonequinone, anthrapyrimidine, anthraquinone, anthanthrone, benzimidazolone, disazo condensation pigments, disazo dyes, azo dyes, azo pigments, quinolones, xanthene, azomethine, quinophthalone, indanthrone, phthalocyanine, triarylcarbonium, dioxazine, aminoanthraquinone, isoindoline , diketopyrrolopyrrole (DPP), thioindigo, thiazineindigo, isoindoline, isoindolinone, pyranthrone, isoviolanthrone, miyoshi methane, triarylmethane and mixtures of any two or more thereof.

The first major surface and the second major surface may be textured for light scattering or diffraction.

The first major surface and the second major surface may be configured to be optically specular.

Additional features and advantages of various embodiments will be set forth, in part, in the description that follows, and will, in part, be apparent from the description, or can be learned by the practice of various embodiments. The objectives and other advantages of various embodiments will be realized and attained by means of the elements and combinations particularly pointed out in the description herein.

### DETAILED DESCRIPTION

For simplicity and illustrative purposes, the present disclosure is described by referring mainly to examples thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Additionally, the elements depicted in the accompanying figures may include additional components and some of the components described in those figures may be removed and/or modified without departing from the scope of the present disclosure. Further, the elements depicted in the figures may not be drawn to scale and thus, the elements may have sizes and/or configurations that differ from those shown in the figures.

It is to be understood that both the foregoing general description and the following detailed description are exemplary and explanatory only, and are intended to provide an explanation of various embodiments of the present teachings.

The present application is directed to an optical device comprising a host material, where the form of the host material can determine the shape and dimensions of the optical device. For example, the host material can be configured in a form of a lamellar particle (e.g., a flake or platelet) so as to form a lamellar optical device of the same shape and size as the configured host material. The optical devices of the present application can have engineered into their structure one or more functions enhancing their optical and non-optical properties. For example, the optical devices can be engineered at the particle level to offer one or more of a lightfast pigment, a high chroma pigment, a pigment with high hiding power, and other advantages as discussed in greater detail herein. The optical devices of the present application offer an alternative to the traditionally used powdered high performance organic and inorganic pigments. Other advantages of the optical devices of the present application include one or more of: controlling the color properties at the particle level of the engineered optical device; controlling light scattering in the visible and/or invisible (UV, IR) wavelengths at the particle level of the engineered optical device; controlling the flop properties at the particle level of the engineered optical device; controlling the hiding ability of the engineered lamellar optical device by adjusting particle thickness, the loading level of the colorant in the host matrix material and/or the particle size of the colorant; controlling the platelet adhesion to the paint system by introducing reactive functions (e.g., adhesion modifying compounds) into the host matrix; providing stabilizing functions at the flake level that is not available at the paint system level; and/or providing stability and reliability at the optical device level for colorants that are not stable when put in a paint or other composition without being incorporated into the host material of the optical device.

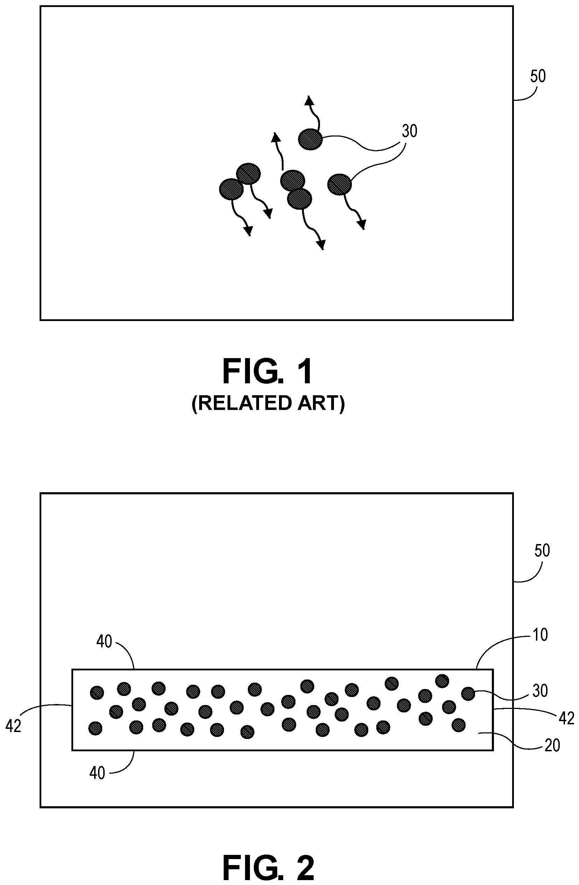

Referring to FIG. 2, the present disclosure is directed to an optical device 10, comprising a host material 20. The host material 20 comprises an optically transparent material. At least one organic colorant 30 is included in the host material 20. The optical device further includes at least one additive (not shown), which can be included in, or otherwise attached to, the host material 20. The phrase "at least one" is equivalent to the phrase "one or more" and either phrase can be substituted for the other throughout this application (e.g., "at least one colorant" is taken to mean the same as "one or more colorants").

The host material 20 can be an optically transparent material that can be configured to define the shape of optical device 10. In an aspect, host material 20 can be in the form of a lamellar-shaped particle, such as a flake or platelet. The lamellar-shaped particle can include one or more layers of host material, as described in detail herein. As described herein, host material 20 can act as a matrix in which the at least one organic colorant 30 is mixed and/or dispersed. The at least one additive can also be included in, or attached to, a surface of host material 20.

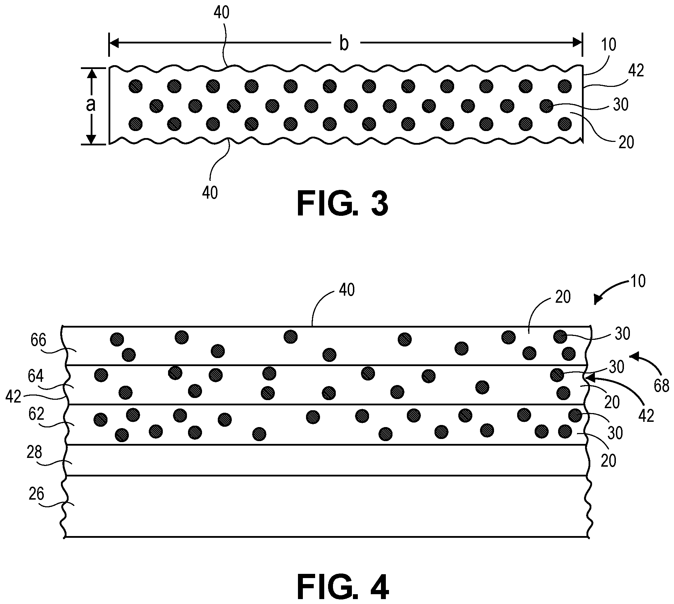

The host material 20 can be in the form of a solid layer having a first major surface 40 and a second major surface 40 opposing the first major surface. In an aspect, the first major surface and the second major surface are outermost surfaces of the optical device 10. In an aspect, optical device 10 has the same host material through the entire thickness, "a", (e.g., see FIG. 3) of the optical device 10. For example, optical device 10 can include only a single layer of the host material 20, such as where the single layer can have the same at least one colorant and at least one additive dispersed throughout the single layer, where the thickness of the single layer is the same as the total thickness of optical device 10.

Alternatively, optical device 10 further comprises at least one additional solid layer comprising a host material. The at least one additional solid layer and the first solid layer form a stack 68, where each layer of the stack is disposed on a major surface of an adjacent layer, as illustrated, for example, by layers 62, 64, 66 of FIG. 4. In an aspect, stack 68 includes two or more adjacent layers of host material 20 that makes up the total thickness, "a" of optical device 10. The host material 20 can be the same or different for any two or more layers of the stack. For example, all layers in the stack can have the same host material. In an aspect, optical device 10 includes only the layers of stack 68, where the thickness of the combined layers (e.g., layers 62, 64 and 66) is the same as the total thickness of optical device 10.

The host material 20 can be a dielectric material, such as, for example, at least one of an organic polymer, an inorganic polymer, and a composite material. The dielectric material is a non-metal that is electrically insulating. In an aspect, the organic material can be at least one material chosen from thermoplastics, thermosets, and energy curable materials. Non-limiting examples of the organic polymer include thermoplastics, such as polyesters, polyolefins, polycarbonates, polyamides, polyimides, polyurethanes, acrylics, acrylates, polyvinylesters, polyethers, polythiols, silicones, fluorocarbons, polyvinyl chloride, polystyrene, polyvinyl acetate, polyvinyl alcohol, and copolymers (e.g., styrene/acrylic copolymer) or blends thereof, as well as acrylic/nitrocellulose blends and acrylic/epoxy hybrids; thermosets, such as epoxies, polyurethanes, acrylates, melamine formaldehyde, urea formaldehyde, phenol formaldehyde and co-polymers or blends thereof; and energy curable materials, such as acrylates, epoxies, vinyls, vinyl esters, styrenes, silanes, and co-polymers or blends thereof. In an aspect, the materials with thermoplastic properties can be chosen from acrylic polymers, polyvinyl chloride, polystyrene, acrylic/nitrocellulose blends, acrylic/epoxy hybrids, styrene/acrylic, polyvinyl acetate, and polyvinyl alcohol. Non-limiting examples of inorganic polymers includes silanes, siloxanes, titanates, zirconates, aluminates, silicates, phosphazanes, polyborazylenes, and polythiazyls. In an aspect, the host material includes one or more polymers, such as any of the organic polymers or inorganic polymers described herein for use as a host material. In an aspect, the one or more polymers are chosen from acrylates, epoxies and polyurethanes and copolymers or blends thereof.

The host material can be present in the optical device in any suitable amount that will provide for desired structural integrity, lightfastness, optical properties and/or other properties. In an aspect, the host material 20 can be present in the optical device 10 in an amount ranging from about 5% to about 95% by weight, for example from about 10% to about 80% by weight, and as a further example from about 20% to about 70% by weight, based on the weight of the optical device 10.

A function of the host material 20 is to provide a main body of the final lamellar optical device 10 that has mechanical integrity. Host material 20 also serves as a matrix into which the colorants 30 can be included and into or onto which the additives can be dispersed or attached. Additionally, by controlling moisture and oxygen permeability, the host material matrix protects the colorants 30 from detrimental hydrolytic and oxidative actions. In an aspect, the host material 20 can provide a level of inner UV-filter effect, protecting the organic colorants 30 from photochemical degradation. By properly matching the chemistries of the host material with those of the at least one organic colorant 30, such as organic dyes and/or organic nano-pigments described herein, the optical device 10 can reduce or prevent the colorants from leaching out of the host systems and/or reduce colorant bleeding problems.

The choice of the host material can also impact spectral characteristics, refractive index, mechanical properties, thermal properties, thermo-mechanical properties, environmental durability, chemical and/or optical properties of the optical device 10. For example, the choice of the chemistry of the host material can allow for engineering the loading level and degree of dispersion of colorants 30, such as organic dyes and nano-dispersed pigments of the optical device 10. This can allow for controlling the hiding power of the lamellar engineered optical device. It is noteworthy, that if desired, the host material can be made with materials that meet strict regulatory requirements and offer attractive biocompatibility profiles. In an example, the host material is selected based on one or more of the curing mechanism, refractive index, hardness, thermomechanical properties, hydrolytic stability, chemical affinity to various organic dyes and/or pigment nanoparticles and compatibility with different paint systems. As other examples, the host material can be selected to provide protection against UV exposure and/or to reduce ingress of moisture and oxygen into the bulk of the optical device, thereby protecting the colorants incorporated therein. In another example, the engineered optical device 10 can be formed with a host material that has a higher refractive index than the refractive index of the composition, such as a paint or other color composition, into which the engineered optical device is to be incorporated as a colorant. In an example, the host material can be employed to control dispersion of nanopigments within the engineered optical device and/or to control dispersion of the engineered optical device within a composition, such as a paint or other color composition, into which the engineered optical device is to be incorporated.

Host material 20 includes at least one organic colorant 30, such as organic dyes, organic nano-pigments (also referred to herein as organic nano-dispersed pigments), or combinations thereof. Optionally, inorganic pigments can also be employed in addition to the organic colorant, as will be discussed in greater detail below. The at least one organic colorant 30 provides a desired color characteristic of the resulting optical device10. By incorporating the at least one organic colorant 30 into host material 20, lightfastness and/or environmental reliability of the at least one organic colorant 30 can be improved compared to using the same at least one organic colorant 30 directly in a color composition 50 without the host material, such as is shown in FIG. 1. The at least one organic colorant 30 can include a plurality (e.g., 2, 3, 4, 5 or more) of different colorants with different hues in the host material 20. For example, a plurality of organic nano-pigments with different hues, a plurality of different organic dyes with different hues, or a combination of one or more organic nano-pigments and one or more organic dyes, can be employed in a single layer of the host material 20.

In an aspect, the optical devices 10 of the present application employ organic nano-pigments as the color introducing materials. Organic nano-pigments can have one or more advantages, such as well-defined spectral properties offering wide choice of available colors and hiding power; attractive pricing, multiple supply sources; known, well understood chemistry/photo-chemistry; availability in form of nanoparticles with different size ranges and size dispersion specifications; widespread acceptance across various markets; and known regulatory ecology related profiles.

In an aspect of the present application, dyes can be employed instead of, or in addition to, organic nano-pigments. For example, in order to increase the lightfastness of the resulting optical device 10 in case of specific colors, such as yellow, orange or red, a mixture of appropriate organic dyes in combination with selected nano-sized pigments can be employed. There is a long list of organic dyes that are known for attractive hue that can be used in this application. The organic dyes can be introduced and dispersed in the host matrix at a molecular level or in a way that allows for formation of their aggregates of controlled shape and size.

Often the same colorant materials can be used as either dyes or pigments, depending on whether or not the material is soluble in the solutions used for making the optical device 10, as would be understood by one of ordinary skill in the art. Where the colorant material is soluble in the solutions employed to make the optical device 10, the colorant is considered a dye and can be included as dye molecules and/or as aggregates of the dye molecules in the host material. Alternatively, where the colorant material is insoluble in the solutions employed to make the optical device 10, the colorant is considered a pigment and can be included as nano-particles in the host material.

Any suitable organic colorant that can provide the desired color effects and that is compatible with the host material 20 can be employed. Non-limiting examples of organic dye and organic nano-pigment materials include perylene, perinone, quinacridone, quinacridonequinone, anthrapyrimidine, anthraquinone, anthanthrone, benzimidazolone, disazo condensation pigments, disazo dyes, azo dyes, azo pigments, quinolones, xanthene, azomethine, quinophthalone, indanthrone, phthalocyanine, triarylcarbonium, dioxazine, aminoanthraquinone, isoindoline , diketopyrrolopyrrole (DPP), thioindigo, thiazineindigo, isoindoline, isoindolinone, pyranthrone, isoviolanthrone, miyoshi methane, triarylmethane, and mixtures of any two or more thereof.

In an aspect, the organic nano-pigments are selected from the following classes of compounds: Benzimidazolone-derived pigments, Diketopyrrolopyrrole (DPP) pigments, Disazocondensation pigments, Isoindoline, Perylene pigments and Phthalocyanine pigments, and combinations thereof. These pigments can provide enhanced colors and chroma. As examples, the Benzimidazolone-derived pigments can be employed for a wide range of yellow and red hues; Diketopyrrolopyrrole (DPP) pigments for red, but also for yellow and orange; Disazocondensation pigments for yellow, orange and red; Isoindoline pigments for lightfast yellow; Perylene pigments for various red hues and black; Phthalocyanine pigments for lightfast blue and green. These pigments provide good color space selectivity, chromaticity and/or color saturation. As an example, Benzimidazolone-derived pigments such as the PY151, PY 154, PY 181, PO 36, PO 181, PY191, which are commercially available, when used as single components or mixtures, can provide various attractive hues of yellow and orange. Examples of organic dyes include polymethine dyes, phthalocyanines, porphyrins, azo-dyes, anthraquinone dyes, and combinations thereof. One or more of any of the above mentioned dyes can be included in combination with one or more of any of the above mentioned organic nano-pigments in the host material of optical device 10. Dyes and or pigments can be employed to provide any desired hues (e.g., hue angles from 0 to 360 on the CIELab color scale), such as red, orange, yellow, green and blue, as well as achromatic colors such as black, grey and white.

In an aspect, the plurality of organic colorants have a particle size of less than 100 nm. While the optical devices of the present application can have certain advantages when very small organic colorant particle sizes, such as less than 100 nm, are employed, it is possible to employ colorants outside of this range. For example, organic pigments having sub-micron particle sizes, such as 50 nm to 0.5 microns, can be employed. However, particles larger than 0.5 microns will cause light scattering effects, which can be undesirable. Therefore, in an aspect, the organic colorants have a D99 of 0.5 microns or less, (e.g., 99% or more of the organic colorant particles are 0.5 microns or smaller). The D99 sizes can generally be determined using the same equipment as is used for determining the D50 sizes for the colorants, as discussed herein.

In an aspect, the plurality of organic colorants, such as nano-pigments and/or any particles formed by aggregation of dyes, have a D50 particle size of less than 100 nm. In an aspect, the D50 of the nano-particles can be smaller than a wave-length of light in an application for which they are intended. Any dye colorants can potentially be in molecular form, such as an individual dye molecule. It is to be understood that colorants in molecular form will have a size of less than 100 nm. Where the colorants are in particulate form (e.g., nano-pigments or aggregated dye particles), the colorants may have a D50 particle size of, for example, about 1 nm to less than 100 nm, or about 5 nm to about 90 nm, or about 10 nm to about 80 nm, or about 50 nm to less than 100 nm. Particle sizes, including the D50 or D99 particle sizes, for the organic colorants herein can be determined with dynamic laser light scattering using a Malvern Zetasizer^{™}, available from Malvern Panalytical, headquartered in Malvern, United Kingdom. In an aspect, any of the organic colorants described herein can have both a D50 and a D99 chosen from any of the D50 and D99 ranges described herein (e.g., a D50 of less than 100 nm and a D99 of 0.5 microns or less).

Any suitable organic colorant concentrations can be employed in the host material 20. For example, the at least one organic colorant 30 can have a total organic colorant concentration in the host material 20 of about 0.1% by weight to about 50% by weight, such as about 5% to about 40% by weight, or about 10% to about 30% by weight, relative to the total weight of the optical device. The total organic colorant concentrations include the total concentrations of all organic colorants in the host, including any organic dyes and organic pigments.

In an aspect, the lamellar optical device 10 can also include nanoparticles of inorganic pigments or other inorganic colorants, such as, for example, as a color balancing means and/or as a pigment extender. Non-limiting examples of inorganic pigments include metal pigments such as Ag, Au, Cu, Fe, Pb, Pd and Pt; metal-oxide pigments such as Al₂ Os, Fe₂ Os, Fe₃ O₄, Cr₂ Os, CuO, CuzO, In₂O₃, Mn₂O₃, PbO, PdO, SnOs, TiOz, ZnO and ZrO_{2;} metal halides such as AgCl, AgBr, AgClₓ Br₁₋ₓ and CuCI; metal carbides such as TiC and B₄C; metal nitrides such as BN and TiN; metal arsenides such as Cd₃As₄; metal phosphides such as Cd₃P₂; metal chalcogenides (sulphides, selenides, tellurides) such as AgS, CdS, HgS, PbS, FeS₂, MoS and ZnS, CdSe, ZnSe and CdTe; and mixed phases such as ZnSe/PbS₂ and CdS/PbS₂. A further group of suitable inorganic pigments includes non-metal pigments, primarily carbon in the form, for example, of graphite or carbon black; non-metal oxide pigments, such as SiO₂; and minerals such as micas; spinels, for example magnetite or copper chromium spinel; heavy spar (BaSO₄) or fluorspar (CaF₂). The inorganic pigments nanoparticles can optionally be present in the composition in any suitable amount, such as from about 0.1 % by weight to about 50% by weight, relative to the total weight of the optical device. In an aspect of the application, inorganic pigments are employed at % by weight concentrations that are lower than those of the organic colorants 30 or are not employed at all. For example, the concentration of inorganic pigments can be employed at concentrations of from 0 wt.% to about 10 wt%, such as about 0.001 wt% to about 5 wt%, or about 0.1 wt% to about 1 wt%, relative to the total weight of the optical device. In an aspect, the inorganic pigments can have any of the D50 or D99 particles size ranges taught herein for the organic colorants. In an aspect, carbon black is not employed as an inorganic pigment.

One or more of any of the above mentioned inorganic pigments can be included in combination with one or more of any of the above mentioned organic colorants (e.g., dyes and/or organic nano-pigments) in the host material of optical device10. If multi-layered stacks of host material are employed, one or more layers of the stack 68 (FIG. 4) can include at least one organic colorant 30 optionally combined with at least one inorganic pigment, and one or more other layers of the stack 68 include only at least one organic colorant 30, only at least one inorganic pigment, or no organic colorant or inorganic pigment at all. Alternatively, no inorganic pigments are included in the optical device 10 (e.g., all layers of an optical device 10 include at least one organic colorant 30).

In an example, an inorganic pigment can be employed as an internal light filter in combination with the organic colorants 30, thereby protecting the organic colorants from light degradation and providing improving lightfastness of the organic pigments. Inorganic pigments are generally more lightfast then organic colorants. The overall lightfastness of an optical device 10 can be extended by including a combination of both at least one organic colorant 30 and at least one inorganic pigment, where the at least one inorganic pigment functions as an internal light filter in the host material 20. Examples of suitable inorganic pigments that can function as light filters include metal nanoparticles or other UV reflecting or absorbing particles, indium tin oxide (ITO) particles, zinc oxide particles and carbon black particles. The inorganic pigments can be included in the same layer as the organic colorants or in different layers. For example, referring to FIG. 4, layer 64 can include at least one organic colorant 30 and layers 62 and 66 can include at least one inorganic pigment that functions as a light filter. By including the light filtering inorganic pigments in layers 62 and 66 on either side of layer 64 in the final optical device 10, the at least one organic pigment 30 in layer 64 can be protected from light degradation. As will be discussed in greater detail below, the final optical device 10 does not include the substrate 26 and any release layer 28, which are shown in FIG. 4.

The optical devices 10 can be engineered to include a variety of additives. For example, the at least one additive can be chosen from UV stabilizers, antioxidants, structural fillers, functional fillers, pigment extenders, surface modifiers and coupling agents. Examples of structural fillers include inorganic nano-particles used as mechanical toughening agents and/or to increase hardness, such as nano-particles of various oxides such as SiO₂, ZrO₂, minerals, such as kaolinites and micas. Examples of functional fillers include nano-particles such as ZnO and TiO₂; silsesquioxanes and indium tin oxide ("ITO"). Examples of surface modifiers include chemically modified poly-alcohols, acrylate modified glycols and hydroxy amino polysiloxanes. Examples of coupling agents include organic silanes that include one or more functional groups chosen from amino groups, epoxy groups, vinyl groups and acrylate groups.

The role of these additives is to engineer and/or adjust one or more performance attributes in the optical device 10. Following is a list of some example functional additives along with the properties of the engineered optical device they impact or improve: UV stabilizers for improving lightfastness; antioxidants for improving environmental stability and durability; structural fillers and/or functional fillers, such as for controlling hardness/brittleness, aiding manufacturing (e.g., release from the substrate and/or sizing of the final optical device 10), adjusting heat transfer and/or increasing refractive index; pigment extenders for improving color and lightfastness; coupling agents for adjusting compatibility with various paint systems. In an aspect, each additive of the at least one additives can be present in the optical device 10 in any amount sufficient to provide the desired effect, such as any of the effects for a particular additive described herein. For example, UV stabilizers can be provided in an amount sufficient to increase light fastness when compared to the same optical device but without the UV stabilizer. One of ordinary skill in the art would be able to determine effective amounts for each additive. The amount can vary based on the type of additives and the desired effect. Suitable amounts of each additive can range, for example, from about 0.1% to about 50% by weight, for example from about 1% to about 40% by weight, and as a further example from about 2% to about 30% by weight, based on the weight of the optical device 10.

By properly selecting the chemistries of the host material 20, colorants and additives and their ratios, the optical devices 10 can be engineered to have various desired properties and/or attributes. Such properties and/or attributes can include, for example: hue, chromaticity, hiding power, lightfastness, flop, chemical and mechanical stability, environmental stability, optical special effects, compatibility with various paint systems or other compositions discussed herein, cost, and/or regulatory compliance. This allows lamellar optical devices 10, such as optical devices in the form of flakes or platelets, to be engineered to have any selected organic colorants 30, such as those described herein, thereby providing a chosen hue, while at the same time allowing the optical device 10 to incorporate individualized stabilizing functions, such as for increasing lightfastness, chemical stability and/or thermal stability of the particular colorants 30 being used. These stabilizing functions can be engineered into the host material 20 of the optical device 10. This can also allow use of different host materials and/or additives for different colorants in a single final composition, such as a paint. This can also allow for improved tailoring of host materials and additives for a given colorant in an economical and efficient manner.

Furthermore, the engineered optical devices 10 of the present application allow for increased flexibility in choosing optical characteristics and other properties. For example, flop is controlled by colorant particle size (preferably < 100 nm, low visible light scattering), flatness of the flake, specular properties, and flat alignment of the flakes in the paint so as to achieve the desired "flop" effect (e.g., the color under increased viewing angle appears darker). On the other hand, lightfastness and durability of a colorant, or a composition incorporating the colorant, generally increases with increasing colorant particle size, so that poor lightfastness and durability are generally achieved at smaller colorant particle sizes, such as sizes less than 100 nm. The optical devices 10 of the present application can be engineered to provide for good flop characteristics by employing very small colorants 30 that have low visible light scattering; while at the same time allowing for better light fastness and durability by employing optical devices 10 with the small colorants 30 in the color composition 50 than would be achieved using the same colorants 30 directly in the color composition 50 without embedding them in the optical devices 10.

Referring again to FIG. 2, optical device 10 can comprising a single, free-standing layer of host material 20. The at least one organic colorant 30 can be dispersed uniformly throughout the host material 20 or can have a non-uniform distribution.

The lamellar shape of the optical device 10 allows for manipulating the surface topography of the flakes. As an example, the surface can be planar and optically specular. For example, as illustrated in FIG. 2, the major opposing surfaces 40 of optical device 10 are both planar. The major opposing surfaces 40 can be sufficiently planar so as to provide a specular reflection of visible and/or UV light.

Alternatively, as shown in FIG. 3, the optical device 10 can include surfaces 40 textured for light scattering or diffraction. For example, by shaping one or more surfaces 40 with a controlled degree of roughness it is possible to control the diffuse properties of the lamellar optical device 10. In an aspect, optical device 10 has at least one, two or more major surfaces 40 having a non-planar topography configured for diffusing light (e.g., visible or UV light) rather than providing a specular reflection. In an aspect, the non-planar topography can have a surface roughness ranging, for example, from about 0.25 µm RMS to about 2 µm RMS.

In an aspect, the non-planar topography is a surface textured with a diffraction grating, which in combination with a sufficiently high refractive index of the host material, can yield an optical device 10 that is a special effects diffractive pigment. The refractive index of host material 20 can be, for example, higher than that of the color composition (e.g., a paint) that the optical devices 10 are to be incorporated into, such as for example, a refractive index of 1.5 or higher, such as about 1.65 to about 2. Any suitable diffraction grating can be employed, such as for example, a grating having about 500 lines/mm to about 4000 lines/mm feature distance and an amplitude of about 50 nm to about 200 nm.

In an aspect, optical device 10 can include multiple adjacent layers of host material, such as illustrated in FIG. 4. FIG. 4 illustrates an example with three separate layers 62, 64, 66, although any number of layers can be employed, such as 2 to 10 layers. The adjacent layers can be arranged in a stack 68. The layers can be the same or different. Where the layers are different, they can have at least one ingredient that is different than another layer in the stack, where the at least one ingredient is chosen from different host materials, different colorants and/or different additives. As examples, the same or different host materials can be used for different layers in a stack 68, where different colorants 30 are used in each layer in the stack.

In an aspect, all of the layers in the stack 68 can have both major opposing surfaces 40 that are planar (i.e., no surfaces are configured to have non-planar topography, such as might be formed, for example, by embossing). For example, in an aspect, the optical device does not include an embossed layer. Alternatively, one or more layers of the stack 68 can be configured to include a non-planar topography, such as a grating or any of the other non-planar topographies described herein. As illustrated in FIG. 3, the major opposing surfaces 40 are the two opposing surfaces having a width dimension "b", which is a dimension perpendicular a thickness dimension, "a", where thickness dimension "a" generally corresponds to a thickness of the host material layer formed on a substrate 26 (FIG. 4), after final processing (e.g., final drying, curing and optional embossing) of the host material 20.

In an aspect, the optical device 10 does not include a metal layer, such as a metal reflector layer or metal absorber layer, as a layer of the stack 68, where metal is defined to include both elemental metals and metal alloys. Reflector layers as disclosed herein are generally sufficiently thick to be opaque to visible light, while absorber layers are sufficiently thin to all transmission of visible light through the layer (e.g., transparent or translucent). In an aspect, the optical device 10 does not include a metal layer, where the metal layer is a continuous metal layer that has a first major surface and an opposing second major surface that each have the same, or approximately the same surface area as a major surface 40 of the lamellar optical device 10, where "approximately" is defined as a difference in surface area of 20% or less based on the surface area of the major surface 40. In an aspect, the optical device 10 does not include an opaque layer (i.e., a layer that does not transmit visible light), such as an opaque metal or non-metal layer having reflective properties. As an example, the optical device 10 does not include an aluminum layer or aluminum alloy. In an aspect where a metal reflector layer or other opaque layer is not present, the optical device 10 can optionally be transparent or translucent with respect to visible light.

In an aspect, the color provided by optical device 10 alone is not the result of interference effects. Rather, the color provided by the optical device 10 is primarily or completely the result of selective absorption within the visible light spectrum by the organic colorants 30 and any inorganic colorants employed. That said, where the optical device is incorporated in a color composition 50, the option of engineering a refractive index difference relative to the color composition 50 (e.g., paint, ink or varnish) allows for the ability to provide a diffractive/ reflector effect, if desired, based on the difference between the refractive index of the optical device 10 and the refractive index of the matrix material of the paint or other color composition 50 (after drying) in which the optical device 10 is incorporated.

In an aspect of optical device 10 that includes a stack 68 of layers, a refractive index of the host material 20 alone, or the combined refractive index of the host material with colorants 30, optional inorganic colorants and additives, of each layer (e.g., layers 62,64,66) of the stack 68 is the same or substantially similar compared to the refractive index of adjacent layers in the stack so as not to provide a significant interference color effect (e.g., no interference color effect or no noticeable interference color effect). For example, the host material alone, or the combined refractive index of the host material with colorants 30, optional inorganic colorants and additives, of each layer in the stack has a difference in refractive index of 0.1 or less compared to the other layers in the stack that are adjacent to that layer. In an aspect, every layer of the stack has a refractive index below 1.65, or alternatively, every layer of the stack has a refractive index above 1.65.

The optical devices 10 of the present application can have any suitable size. For example, a width, "b", of the optical devices can range from about 0.2 µm to about 500 µm, such as from about 0.5 µm to about 100 µm, or about 1 µm to about 50 µm. One of ordinary skill in the art would readily understand that a width for a population of optical devices 10 can be determined as a D50 value, as is well known in the art. Optical devices 10 can have a D50 of, for example, from about 1 µm to about 100 µm, such as from about 10 µm to about 30 µm. The D50 of the optical device 10 population can be determined by dynamic laser light scattering using a Malvern Mastersizer 3000^{™}, available from Malvern Panalytical, headquartered in Malvern, United Kingdom. The thickness "a" of the optical devices 10 can range from about 0.2 microns to about 10 microns, or about 1 micron to about 5 microns.

As described in the present application, optical device 10 can be in a form of a lamellar form factor particle, as illustrated for example in FIGS. 2 and 3. The lamellar form-factor of the optical device 10 as described herein allows for controlling the thickness and the aspect ratio of the optical devices. In an aspect, the host material 20 is configured so that optical device 10 has an aspect ratio of width, "b", to thickness, "a", as shown in FIG. 3. The aspect ratio b:a can range from about 2:1 to about 10,000:1, such as about 5:1 to about 5000:1 or about 10:1 to about 1000:1. In other examples, the aspect ratio can range from about 1:1 or greater, such as about 2:1 or greater or about 5:1 or greater, such as about 1:1 to about 500:1, for example from about 2:1 to about 250:1, about 2:1 to about 100:1, or about 2:1 to about 50:1.

In an aspect, the lamellar form factor and the methods employed for making the optical device 10 allow for precise thickness control of optical device 10, which in turn can allow for precise color control. As an example, a population of optical devices 10 incorporated into a color composition 50, can mostly all, substantially all, or all have a uniform thickness (e.g., can vary in thickness by less than 3%, less than 2% or less than 1%), where "mostly all" refers to 75% or more of the optical devices in the population and "substantially all" refers to 90% or more of the optical devices in the population. In an aspect, the population of optical devices 10 in the color composition are the same hue and materials (e.g., having the same organic colorant, host material and additives). In an aspect, two or more different populations of optical devices 10 are incorporated into the color composition, where each population has a different hue and/or materials (e.g., different organic colorant, host material and/or additives). Each of the different populations of optical devices 10, can mostly all, substantially all, or all have a uniform thickness (e.g., can vary in thickness by less than 3%, less than 2% or less than 1%). The ability to provide a relatively uniform thickness within each of the one or more optical device 10 populations can also allow for more uniform control of aspect ratios.

The present disclosure is also directed to a method of making an optical device10. The method comprises combining at least one organic colorant 30, at least one additive and a liquid host material to form a coating composition. The at least one organic colorant 30 can be any of the colorants 30, such as organic dyes, organic nano-pigments, or combinations thereof, as described herein. In an aspect, the at least one organic colorant has any of the particle sizes and/or aspect ratios described herein.

Referring to FIG. 4, the coating composition is deposited onto a substrate 26 using a liquid coating process. The coating composition is then solidified to form a solid layer, such as any of the host material 20 layers described herein. Optionally, additional layers of the same or a different coating composition can be deposited to form a stack 68 of any of the solid layers described herein, such as illustrated by layers 62, 64, 66). The substrate 26 is released from the solid layer or stack 68. In an aspect, the method further comprises separating the solid layer or layer stack 68 into particles to form optical devices 10 using any suitable sizing techniques, as described in greater detail herein below.

Any of the optical devices 10 described herein can be made by the methods of the present application. In an aspect, the method includes depositing only a single layer, so that the final optical device includes only a single layer of the host material 20, wherein the single layer comprises the at least one colorant and at least one additive, as described herein. Alternatively, the optical device 10 can include two or more adjacent layers of host material in a stack, such as any of the multilayer optical devices 10 described herein. Any of the host materials, colorants and additives describe herein can be employed in the methods of the present application.

The method can include combining at least one colorant, at least one additive and the liquid host material to form a coating composition. The liquid host material can be an aqueous-based composition or an organic solution-based composition (e.g., a composition comprising a primarily organic carrier and/or solvents) that includes host material precursors, such as monomers, oligomers and other ingredients. Any suitable technique for forming the coating composition can be employed. The host material ingredients, at least one organic colorant and at least one additive can be added to the coating composition in any suitable order. Examples of suitable techniques include forming the host material by sol-gel process using precursors of various metal oxides where the at least one colorant and/or at least one additive can be added during or after formation of the liquid host material. In an example, the colorant can be incorporated into the host material by dispersion or dissolution, optionally with the aid of aqueous or organic-based processing solutions, such as any of the organic or aqueous based solvents disclosed herein. Any other suitable techniques can be employed.

The coating composition can have a solids content ranging from about 0.01 % to about 100%, for example from about 0.05% to about 80%, and as a further example from about 1 % to about 30%. In some aspects, the solids content can be greater than 3%. In some aspects, the coating composition can have a solids content ranging from about 3% to about 100%, for example from about 4% to 50%.

In some aspects, the at least one organic colorant and any optional inorganic colorants can be part of a selective light modulator system (SLMS). The SLMS can include at least one coating ingredient other than the colorants, such as at least one coating composition ingredient chosen from a curing agent and a coating aid. The ingredients of the SLMS can be combined with other ingredients of the coating composition either together as a combined SLMS or individually in any desired order.

The curing agent can be a compound or material that can initiate hardening, vitrification, crosslinking, or polymerizing of the host material. Non-limiting examples of a curing agent include solvents, radical generators (by energy or chemical), acid generators (by energy or chemical), condensation initiators, and acid/base catalysts.

Non-limiting examples of the coating aid include leveling agents, wetting agents, defoamers, curing inhibition mitigating agents, antifouling agents, corrosion inhibitors, photosensitizers, secondary crosslinkers, infrared absorbers for enhanced infrared drying, and adhesion promoters. In an aspect, the antioxidant can be present in the coating composition in an amount ranging from about 25 ppm to about 5% by weight.

As mentioned above, the coating compositions for the one or more layers of the optical device 10 can each independently comprise an organic or aqueous-based solvent. Non-limiting examples of solvents can include acetates, such as ethyl acetate, propyl acetate, and butyl acetate; acetone; water; ketones, such as dimethyl ketone (DMK), methylethyl ketone (MEK), secbutyl methyl ketone (SBMK), ter-butyl methyl ketone (TBMK), cyclopenthanon, and anisole; glycol and glycol derivatives, such as propylene glycol methyl ether, and propylene glycol methyl ether acetate; alcohols, such as isopropyl alcohol, and diacetone alcohol; esters, such as malonates; heterocyclic solvents, such as n-methyl pyrrolidone; hydrocarbons, such as toluene, and xylene; coalescing solvents, such as glycol ethers; and mixtures thereof. In an aspect, the solvent can be present in the coating composition in an amount ranging from about 0% to about 99.9%, for example from about 0.005% to about 99%, and as a further example from about 0.05% to about 90% by weight relative to the total weight of the coating composition.

In some examples, the coating composition can include at least one ingredient chosen from (i) a photoinitiator, (ii) an oxygen inhibition mitigation composition, (iii) a leveling agent, and (iv) a defoamer.

The oxygen inhibition mitigation composition can be used to mitigate the oxygen inhibition of the free radical material. The molecular oxygen can quench the triplet state of a photoinitiator sensitizer or it can scavenge the free radicals resulting in reduced coating properties and/or uncured liquid surfaces. The oxygen inhibition mitigation composition can reduce the oxygen inhibition or can improve the cure of the host materials.

The oxygen inhibition composition can comprise more than one compound. The oxygen inhibition mitigation composition can comprise at least one acrylate, for example at least one acrylate monomer and at least one acrylate oligomer. In an aspect, the oxygen inhibition mitigation composition can comprise at least one acrylate monomer and two acrylate oligomers. Non-limiting examples of an acrylate for use in the oxygen inhibition mitigation composition can include acrylates; methacrylates; epoxy acrylates, such as modified epoxy acrylate; polyester acrylates, such as acid functional polyester acrylates, tetra functional polyester acrylates, modified polyester acrylates, and bio-sourced polyester acrylates; polyether acrylates, such as amine modified polyether acrylates including amine functional acrylate co-initiators and tertiary amine co-initiators; urethane acrylates, such aromatic urethane acrylates, modified aliphatic urethane acrylates, aliphatic urethane acrylates, and aliphatic allophanate based urethane acrylates; and monomers and oligomers thereof. In an aspect, the oxygen inhibition mitigation composition can include at least one acrylate oligomer, such as two oligomers. The at least one acrylate oligomer can be selected/chosen from a polyester acrylate and a polyether acrylate, such as a mercapto modified polyester acrylate and an amine modified polyether tetraacrylate. The oxygen inhibition mitigation composition can also include at least one monomer, such as 1,6-hexanediol diacrylate. The oxygen inhibition mitigation composition can be present in the liquid coating composition in an amount ranging from about 5% to about 95%, for example from about 10% to about 90%, and as a further example from about 15% to about 85% by weight relative to the total weight of the liquid coating composition.

In some examples, the host material can use a non-radical cure system such as a cationic system. Cationic systems are less susceptible to the mitigation of the oxygen inhibition of the free radical process, and thus may not require an oxygen inhibition mitigation composition. In an example, the use of the monomer 3-Ethyl-3-hydroxymethyloxetane does not require an oxygen mitigation composition.

In an aspect, the coating compositions for each layer of the host material employed in the optical devices 10 can each independently include at least one photoinitiator, such as two photoinitiators, or three photoinitiators. The photoinitiator can be used for shorter wavelengths. The photoinitiator can be active for actinic wavelength. The photoinitiator can be a Type 1 photoinitiator or a Type II photoinitiator. The coating composition can include only Type I photoinitiators, only Type II photoinitiators, or a combination of both Type I and Type II photoinitiators. The photoinitiator can be present in the coating composition in an amount ranging from about 0.25% to about 15%, for example from about 0.5% to about 10%, and as a further example from about 1% to about 5% by weight relative to the total weight of the of the liquid coating composition.

The photoinitiator can be a phosphineoxide. The phosphineoxide can include, but is not limited to, a monoacyl phosphineoxide and a bis acyl phosphine oxide. The mono acyl phosphine oxide can be a diphenyl (2,4,6-trimethylbenzoyl)phosphineoxide. The bis acyl phosphine oxide can be a bis (2,4,6-trimethylbenzoyl)phenylphosphineoxide. In an aspect, at least one phosphineoxide can be present in the coating composition. For example, two phosphineoxides can be present in the composition.

A sensitizer can be present in the coating composition and can act as a sensitizer for Type 1 and/or a Type II photoinitiators. The sensitizer can also act as a Type II photoinitiator. In an aspect, the sensitizer can be present in the coating composition in an amount ranging from about 0.05% to about 10%, for example from about 0.1% to about 7%, and as a further example from about 1% to about 5% by weight relative to the total weight of the coating composition. The sensitizer can be a thioxanthone, such as 1-chloro-4-propoxythioxanthone.

In an aspect, the coating composition can include a leveling agent. The leveling agent can be a polyacrylate. The leveling agent can eliminate cratering of the layers of host material deposited using the coating composition. The leveling agent can be present in the coating composition in an amount ranging from about 0.05% to about 10%, for example from about 1% to about 7%, and as a further example from about 2% to about 5% by weight relative to the total weight of the coating composition.

The coating composition can also include a defoamer. The defoamer can reduce surface tension. The defoamer can be a silicone free liquid organic polymer. The defoamer can be present in the coating composition in an amount ranging from about 0.05% to about 5%, for example from about 0.2% to about 4%, and as a further example from about 0.4% to about 3% by weight relative to the total weight of the coating composition.

The coating composition is deposited onto a substrate 26 using a liquid coating process. The substrate 26 can have any suitable configuration and can be either flexible or rigid. In an aspect, the substrate 26 can comprise a flexible material that is present in a roll configuration so that the layers of the diffractive optical device10 are deposited onto the substrate 26 as it moves from an unwind to a rewind roll configuration, as is well known in the art. The wavy edges of the substrate 26, release layer 28 and stack 68 in FIG. 4 are meant to illustrate that the substrate and layers deposited thereon can extend in both directions on a length of substrate during the deposition process. The substrate 26 can be any suitable material that can receive multiple layers deposited during the manufacturing process. Non-limiting examples of suitable substrate materials include polymer web, such as polyethylene terephthalate (PET), glass foil, glass sheets, polymeric foils, polymeric sheets, metal foils, metal sheets, ceramic foils, ceramic sheets, ionic liquid, paper, silicon wafers, etc. As mentioned above, the substrate 26 can be made of a flexible material. In as aspect, such as where embossing is to be employed to shape the layers of optical device 10, the substrate 26 can include a material that has a Tg temperature that is higher than a Tg of the embossed layers and/or other layers of optical device10. In an aspect, the substrate comprises a material that is heat resistant, such as a polyester, a polyamide, polyvinyl chloride, or propylene. The substrate can have any suitable thickness, such as, for example from about 6 µm to about 200 µm, and as a further example from about 10 µm to about 50 µm.

In an aspect, the substrate is temporary and is removed from the optical device layers, as discussed below. For example, the coating composition can be coated onto a temporary substrate that includes an optional release layer 28, if desired.

Deposition of the coating composition is carried out by wet coating methods. For example, the coating composition for the one or more optical device layers can be coated/applied/deposited using a liquid coating process. Non-limiting example of a liquid coating process include slot-die, comma bar, knife, spray, gravure, microgravure, inkjet, curtain coating, metering rod, Mayer rod coating, flexo, offset printing, slot-bead, slide bead, slot curtain, slide curtain, tensioned web and reverse roll, as well as other liquid coating and printing processes that apply a liquid onto a substrate or previously deposited layer to form a liquid layer or film that is subsequently dried and/or cured. In an aspect, the deposition method is selected from slot-die, slot-bead, slide bead, slot curtain and slide curtain techniques.

The liquid coating process can allow for the deposition of the optical device coatings at a faster rate as compared to some other deposition techniques, such as vapor deposition. Additionally, the liquid coating process can allow for a wider variety of materials to be used in the layer with a simple equipment set up compared to vapor deposition methods. It is believed that the layer formed using a liquid coating process can exhibit improved optical performance.

After deposition, the coating composition can be solidified to form a solid layer. Solidifying the coating composition can include evaporating the processing solvent and converting the liquid host material into a solid layer by any suitable technique, such as by additional drying and/or curing techniques. Curing can be employed to cross-link the polymer precursors of the host material and can be carried out by any desired technique, including any techniques discussed herein.

After the wet coating composition has been deposited on the substrate 26, any solvent present in the wet coating composition can be evaporated. The liquid coating process continues with curing of the wet coating composition to result in a cured, self-leveled optical device layer having a desired thickness. It is believed that the ability of the optical device layers to self-level results in a layer having a reduced optical thickness variation across the layer. Ultimately, an article 10, such as an optical device, comprising the self-leveled optical device layer can exhibit increased optical precision. For ease of understanding, the term "wet film" refers to the wet coating composition and "dry film" refer to the final dried/cured optical device 10 layer after final drying/curing. Unless otherwise specified, the "coating composition" generally refers to the coating composition before any drying or curing occurs.

The solvent can be evaporated from the wet film, such as before the wet film is cured. In an aspect, about 100%, for example about 99.9%, and as a further example about 99.8% of the solvent can be evaporated from the coating composition, prior to curing. In a further aspect, trace amounts of solvent can be present in a cured/dry layer. In an aspect, a wet film having a greater original weight percent of solvent can result in a dry film having a reduced film thickness H. In particular, a wet film having a high weight percent of solvent and being deposited at a high wet film thickness D can result in an optical device 10 layer having a low dry film thickness H. It is important to note, that after evaporation of the solvent, the wet film remains a liquid thereby avoiding problems such as skinning, and island formation during the subsequent curing steps in the liquid coating process.

As examples, the dynamic viscosity of the wet film prior to drying can range from about 0.5 to about 50 cP, for example from about 1 to about 45 cP, and as a further example from about 2 to about 40 cP. The viscosity measurement temperature is 25°C, the rheology can be measured with an Anton Paar MCR 101 rheometer equipped with a solvent trap using a cone/plate 40 mm diameter with 0.3° angle at a gap setting of 0.025 mm.

In an aspect, host material precursors and the solvent can be selected so that the wet film exhibits Newtonian behavior for precision coating using the liquid coating process. The wet film can exhibit Newtonian behavior shear rates up to 10,000 s⁻¹ and higher. As examples, the shear rate for the liquid coating process can be 1000 s⁻¹ for a coating speed up to 25 m/min, for example 3900 s⁻¹ for a coating speed up to 100 m/min, and as a further example 7900 s⁻¹ for a coating speed up to 200 m/min. It will be understood that a maximum shear rate can occur on a very thin wet film, such as 1 µm thick. As the wet film thickness is increased, the shear rate can be expected to decrease, for example decrease 15% for a 10 µm wet film, and as a further example decrease 30% for a 20 µm wet film.

The evaporation of the solvent from the wet film can cause a change in viscosity behavior to pseudoplastic, which can be beneficial to achieve a precision optical device 10 layer. The dynamic viscosity of the deposited coating composition after any solvent has been evaporated, can range from about 10 cP to about 3000 cP, for example from about 20 cP to about 2500cP, and as a further example from about 30 cP to about 2000 cP. When evaporating the solvent, if present, from the wet film, there can be an increase in viscosity to the pseudoplastic behavior. The pseudoplastic behavior can allow for self-leveling of the wet film.

In an aspect, the method can include evaporating the solvent present in the wet film using known techniques. The amount of time required to evaporate the solvent can be dependent upon the speed of the web/substrate and the dryer capacity. In an example, the temperature of the dryer (not shown) can be less than about 120° C, for example less than about 100° C, and as a further example less than about 80° C.

The wet film deposited using a liquid coating process can be cured using known techniques. In an aspect, the wet film can be cured using a curing agent utilizing at least one of an ultraviolet light, visible light, infrared, or electron beam. Curing can proceed in an inert or ambient atmosphere. In an aspect, the curing step utilizes an ultraviolet light source having a wavelength of about 395 nm. The ultraviolet light source can be applied to the wet film at a dose ranging from about 200 mJ/cm² to about 1000 mJ/cm², for example ranging from about 250 mJ/cm² to about 900 mJ/cm², and as a further example from about mJ/cm² to about 850 mJ/cm².

The wet film can crosslink by known techniques. Non-limiting examples include photoinduced polymerization, such as free radical polymerization, spectrally sensitized photoinduced free radical polymerization, photoinduced cationic polymerization, spectrally sensitized photoinduced cationic polymerization, and photoinduced cycloaddition; electron beam induced polymerization, such as electron beam induced free radical polymerization, electron beam induced cationic polymerization, and electron beam induced cycloaddition; and thermally induced polymerization, such as thermally induced cationic polymerization.

The method further includes releasing the substrate 26 from the solidified optical device layer (e.g., a single layer or stack 68). The solid layer can be released from the substrate 26 by a mechanical process, e.g., high speed air collision, scraping, or a chemical solvent based dissolving/weakening or swelling of the release layer if a release layer is present. The optional release layer 28 (FIG. 4) can have a lower adhesion to the adjacent solidified optical device layer (e.g., layer 62) as compared to the substrate 26. In an aspect, the release layer 28 is soluble in an organic solvent or water and can be partially or fully dissolved or weakened to aid in separation of the solid coating from the substrate. After releasing, the solid layer is collected and prepared for sizing.

The method further includes sizing the solid layer to form optical devices. Sizing generally involves sizing of the lateral, or width, dimensions. Any sizing technique can be employed, such as grinding or other methods. As an example, the sizing of the coating into flakes of desired size can be done by mechanical air assisted collision and sieving, or by sizing with directed energy beam(laser), or by cutting or punching the desired flake size. The aspect ratio can be relatively tightly controlled to be within a desired range. In an aspect, the particle sizes can be monodisperse, although this can be more expensive than using techniques, such as mechanical grinding, that do not provide monodisperse particle sizes.

In an aspect, the optical devices 10 are mechanically sized (e.g., ground, such as by mechanical air assisted collision, or cut) and thus have rough and/or cut edges 42 (FIGs 2 to 4) at which internal layers (e.g., layer 64 in FIG. 4) are exposed. This distinguishes the optical devices of the present application from pigments that do not have rough or cut edges, such as pigment particles that are grown to a desired particle size in solution or where a layer is deposited on a core particle to entirely surround, or encapsulate, the core particle.

Prior to releasing the substrate 26 from the optical device 10 layer(s), one or more surfaces of the optical device can optionally be shaped to provide a desired topography, as is illustrated in FIG. 3. Any suitable technique can be employed for providing the desired topography, such as for example, embossing. In an aspect, the optical device 10 is embossed on opposing major surfaces of the layer of host material 20, such as shown in FIG. 3. In multilayer stacks, such as shown in FIG. 4, one or more surfaces of one or more layers of the stack can be embossed, e.g., partially or fully. For example, a first major surface of a layer can be embossed and a second major surface of the layer can be embossed or non-embossed. Additionally, and/or alternatively, one or more surfaces of one or more layers of the stack can be non-embossed. A non-embossed surface and/or layer can be smooth, such as planar, for example, due to self-leveling of the liquid deposited coating compositions. If desired, the release layer 28 can be embossed, followed by deposition of the coating composition in order to provide the desired topography on a first surface of the optical device. A second surface of the optical device opposing the first surface can also be embossed to provide the desired topography on the second surface. Embossing can provide any desired pattern, such as a suitable microstructure (e.g., a diffraction grating) to the deposited layers or any of the topography configurations described herein.

The embossing of the coating composition can occur before the host material 20 is fully solidified, such as after partial drying and/or partial curing of the host material. After a layer of coating composition is deposited using a liquid coating process, any solvent in the layer is allowed time to evaporate. Additionally, the deposited layer can be subjected to a curing step. In an aspect, embossing can be carried out prior to full curing of a deposited layer. In this manner, the step of embossing can utilize less pressure and/or temperature as compared to embossing a layer that has been fully cured, and/or a layer that is applied using a vacuum deposition process.

The present disclosure is also directed to a color composition 50, comprising: a liquid medium; and a plurality of optical devices 10 dispersed in the liquid medium; wherein the color composition is, for example, a paint, an ink, a varnish, or any other composition in which pigments may be employed. In an example, the color composition is a paint used for automobiles, aircraft, boats, home exteriors or other outdoor applications where lightfastness is desired.

Any of the optical devices 10 described herein can be employed in the colored composition. For example, the optical devices 10 can be made of any of the same materials, such as host materials, colorants and additives, and have any of the same properties, characteristics, sizes, shapes and so forth, as described herein for any of the optical devices 10.

In an aspect, the plurality of optical devices 10 have a uniform thickness, "a", from optical device to optical device in a given optical device population. Any of the optical devices or optical device populations having uniform thicknesses as described herein can be employed. For example, the plurality of optical devices of a color composition 50 can include a population of optical devices having the same colorant, wherein 75% or more of the optical devices of the population have a uniform thickness from optical device to optical device. As described herein above, an average thickness variation between the optical devices can be less than 5%, such as less than 3% or less than 1%. A plurality of different optical device populations, where each population has a uniform thickness from optical device to optical device, can be employed in the same composition 50, as is described in greater detail herein.

In an aspect, the host material 20 of the optical device 10 can have a refractive index that is the same or different than a refractive index of the matrix material that surrounds the optical device 10 in the dry color composition 50, where "dry color composition" refers to the color composition 50 after final drying and/or curing of the color composition. In an example, the engineered optical device can be formed with a host material 20 that has a higher refractive index than the refractive index of the matrix material of the dry color composition 50 so as to provide for a desired optical effect, such as a reflective, diffractive and/or opalescent effect. As an example, the host material 20 can have a refractive index that is at least 0.1 larger than the refractive index of the matrix material that surrounds the optical device in the dry color composition 50.

### EXAMPLES

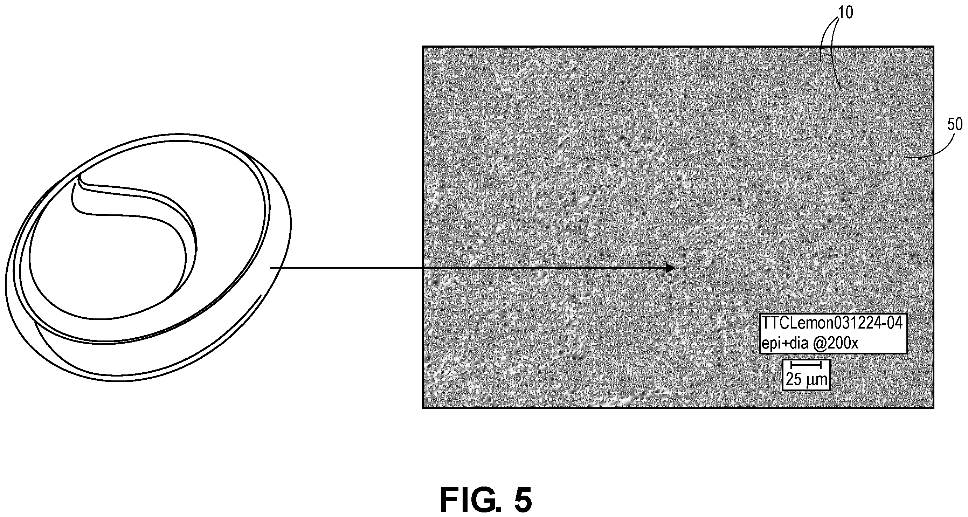

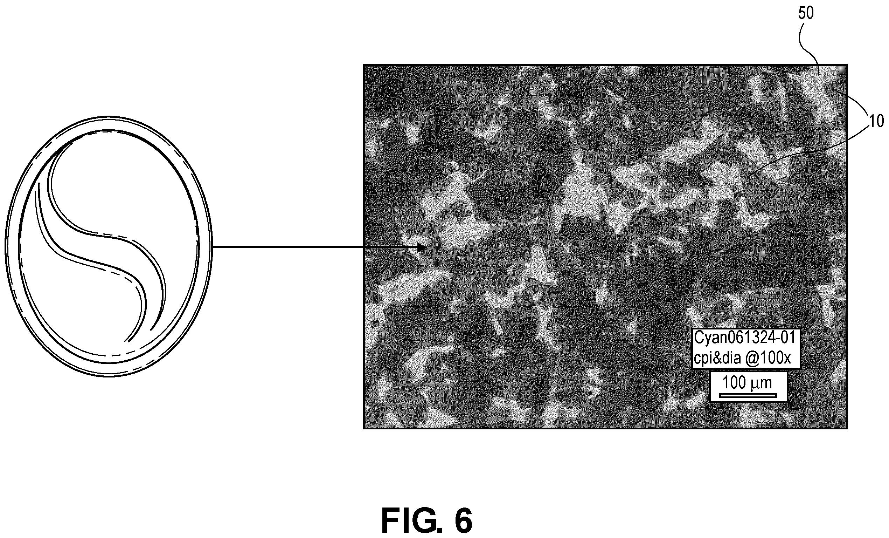

FIGS. 5 and 6 show dry color compositions 50 formed in a layer that include lamellar optical devices 10, according to the present application. The optical devices 10 of FIG. 5 comprise a single layer of an acrylate host material with an organic molecular yellow dye and a leveling agent additive (BYK-361N, available from BYK), mixed therein. The optical devices 10 of FIG. 6 comprise a single layer of acrylate host material with organic nano-sized cyan pigments and a leveling agent (BYK-361N, available from BYK), mixed therein.

From the foregoing description, those skilled in the art can appreciate that the present teachings can be implemented in a variety of forms. Therefore, while these teachings have been described in connection with particular embodiments and examples thereof, the true scope of the present teachings should not be so limited. Various changes and modifications can be made without departing from the scope of the teachings herein.

This scope disclosure is to be broadly construed. It is intended that this disclosure disclose equivalents, means, systems and methods to achieve the devices, activities and mechanical actions disclosed herein. For each device, article, method, mean, mechanical element or mechanism disclosed, it is intended that this disclosure also encompass in its disclosure and teaches equivalents, means, systems and methods for practicing the many aspects, mechanisms and devices disclosed herein. The claims of this application are likewise to be broadly construed. The description of the inventions herein in their many embodiments is merely exemplary in nature and, thus, variations that do not depart from the gist of the invention are intended to be within the scope of the invention. Such variations are not to be regarded as a departure from the spirit and scope of the invention.

## Claims

1. An optical device, comprising:
a host material comprising an optically transparent material;
at least one organic colorant in the host material; and
at least one additive,
wherein the optical device is a particle having a lamellar shape.

2. The optical device of claim 1, wherein the host material has a first major surface and a second major surface opposing the first major surface, wherein the first major surface and the second major surface are outermost surfaces of the optical device.

3. The optical device of claim 1 or claim 2, wherein the host material includes one or more polymers.

4. The optical device of any of claims 1 to 3, wherein the at least one organic colorant includes an organic nano-pigment or dye.

5. The optical device of claim 4, wherein the nano-pigment is chosen from Benzimidazolone-derived pigments, Diketopyrrolopyrrole (DPP) pigments, Disazocondensation pigments, Isoindoline, Perylene pigments and Phthalocyanine pigments; and wherein the dye is chosen from polymethine dyes, phthalocyanines, porphyrins, azo-dyes and anthraquinone dyes.

6. The optical device of any of claims 1 to 5, wherein the at least one additive is chosen from UV stabilizers, antioxidants, structural fillers, functional fillers, pigment extenders, surface modifiers and coupling agents.

7. The optical device of any of claims 1 to 6, wherein the at least one organic colorant has a D50 particle size less than 100 nm.

8. The optical device of any of claims 1 to 7, wherein:
the optical device has an aspect ratio of about 2:1 to 10,000:1.

9. The optical device of any of claims 1 to 8:
wherein the host material has a first major surface and a second major surface opposing the first major surface, wherein the layer having a first major surface and a second major is a first layer, the optical device further comprising at least one additional layer comprising a host material, the at least one additional layer and the first layer forming a stack;
wherein the optical device does not include a metal layer; and
wherein the optical device does not include an embossed layer.

10. The optical device of any of claims 1 to 9, wherein the host material is an organic polymer and further wherein the at least one organic colorant is a nano-pigment or dye, the nano-pigment or dye including a material chosen from perylene, perinone, quinacridone, quinacridonequinone, anthrapyrimidine, anthraquinone, anthanthrone, benzimidazolone, disazo condensation pigments, disazo dyes, azo dyes, azo pigments, quinolones, xanthene, azomethine, quinophthalone, indanthrone, phthalocyanine, triarylcarbonium, dioxazine, aminoanthraquinone, isoindoline , diketopyrrolopyrrole (DPP), thioindigo, thiazineindigo, isoindoline, isoindolinone, pyranthrone, isoviolanthrone, miyoshi methane, triarylmethane and mixtures of any two or more thereof.

11. The optical device of any of claims 2 to 10, wherein the first major surface and the second major surface are textured for light scattering or diffraction; or wherein the first major surface and the second major surface are configured to be optically specular.

12. A paint system including the optical device of any of claims 1 to 11.

13. A color composition, comprising:
a liquid medium; and
a plurality of the optical devices of any of claims 1 to 11 dispersed in the liquid medium.

14. The composition of claim 13, wherein the plurality of optical devices include a population of optical devices having the same colorant, wherein 75% or more of the optical devices of the population have a uniform thickness from optical device to optical device; and wherein the composition is an ink, a varnish or a paint.

15. A method of making an optical device, comprising:
combining at least one organic colorant, at least one additive and a liquid host material to form a coating composition, wherein the at least one organic colorant has a D50 particle size of less than 100 nm;
depositing the coating composition onto a substrate using a liquid coating process;
solidifying the host material to form a solid layer;
releasing the substrate from the solid layer; and
separating the solid layer into particles.
